(19) Europäisches Patentamt / European Patent Office / Office européen des brevets

(11) **EP 3 885 183 B1**

(12) **EUROPEAN PATENT SPECIFICATION**

(45) Date of publication and mention
of the grant of the patent:
**22.01.2025 Bulletin 2025/04**

(21) Application number: **21162501.7**

(22) Date of filing: **15.03.2021**

(51) International Patent Classification (IPC):
***B60M 5/02*** *(2006.01)*

(52) Cooperative Patent Classification (CPC):
**B60M 5/02**

(54) **RAIL-TO-GROUND VOLTAGE SUPPRESSION SYSTEM**

SCHIENE-ZU-BODEN-SPANNUNGSUNTERDRÜCKUNGSSYSTEM

SYSTÈME DE SUPPRESSION DE TENSION DU RAIL AU SOL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.03.2020 JP 2020043606**

(43) Date of publication of application:
**29.09.2021 Bulletin 2021/39**

(73) Proprietor: **Hitachi, Ltd.
Chiyoda-ku,
Tokyo 100-8280 (JP)**

(72) Inventors:
• **KIMURA, Shota**
  **Chiyoda-ku, Tokyo 1008280 (JP)**
• **SUZUKI, Motonari**
  **Chiyoda-ku, Tokyo 1008280 (JP)**
• **MIYAUCHI, Tsutomu**
  **Chiyoda-ku, Tokyo 1008280 (JP)**
• **OGUMA, Kenji**
  **Chiyoda-ku, Tokyo 1008280 (JP)**
• **TAKAHASHI, Hirotaka**
  **Chiyoda-ku, Tokyo 1008280 (JP)**

(74) Representative: **Mewburn Ellis LLP
Aurora Building
Counterslip
Bristol BS1 6BX (GB)**

(56) References cited:
**JP-A- 2018 185 284**

• **MARULLI GEORGE ET AL: "Earthing and
Negative Return Systems in the Melbourne DC
Railway", 2018 DOWN TO EARTH CONFERENCE
(DTEC), IEEE, 27 November 2018 (2018-11-27),
pages 1 - 8, XP033556737, DOI: 10.1109/
DTEC.2018.8726914**

## Description

BACKGROUND

The present invention relates to a rail-to-ground voltage suppression system.

In an electric railway, an electrical substation as a power source and a vehicle as a load are each connected to an overhead line as a positive electrode and a rail as a negative electrode to form an electric circuit, thereby supplying an electric power necessary for running of the vehicle. That is, during the vehicle running, a current flows from the electrical substation to the vehicle through the overhead line as the positive electrode, and a current flows (return current) from the vehicle to the electrical substation through the rail as the negative electrode.

The return current causes a voltage drop in the rail between the electrical substation and the vehicle, thus causing an electric potential difference (rail-to-ground voltage) between the rail and the ground as an electric potential reference in accordance with a distribution of the voltage drop on the entire train line. Since an excessive rail-to-ground voltage causes a risk of electrical shock when a railway worker touches the rail, recently, as indicated by the international standard IEC62128, it is required to keep the rail-to-ground voltage within a predetermined range (see IEC62128-1:2013. Railway applications-Fixed installations-Electrical safety, earthing and the return circuit-Part 1: Protective provisions against electric shock, IEC62128-2:2013. Railway applications-Fixed installations-Electrical safety, earthing and the return circuit-Part 2: Provisions against the effects of stray currents caused by d.c. traction systems, and IEC62128-3:2013. Railway applications-Fixed installations-Electrical safety, earthing and the return circuit-Part 3: Mutual interaction of a.c. and d.c. traction systems).

For example, as disclosed in Japanese Unexamined Patent Application Publication No. 2018-185284, as a countermeasure to the excessive rail-to-ground voltage, a device (VLD: Voltage Limiting Device) for suppressing the rail-to-ground voltage is introduced. With this device, a short circuit switch is disposed between a rail and an earth, and a short circuit is caused between the rail and the earth when the rail-to-ground voltage exceeding a predetermined value is detected, and potential equalization is performed between the rail and the ground, thereby suppressing the rail-to-ground voltage.

SUMMARY

However, in the conventional configuration in which the VLD is disposed as disclosed in Japanese Unexamined Patent Application Publication No. 2018-185284, there is a problem in that while the rail-to-ground voltage at the proximity of the VLD is suppressed, a fluctuation of the rail-to-ground voltage at an activated position of the VLD spreads to the entire train line, thus secondarily generating the excessive rail-to-ground voltage at a distant place from the VLD.

The present invention has been made in consideration of the above-described point, and its one object is to suppress a generation of an excessive rail-to-ground voltage at a distant place from a voltage control device due to a spread of a fluctuation of a rail-to-ground voltage at an activated position of the voltage control device to the entire train line.

To solve the above-described problem, the present invention provides a rail-to-ground voltage suppression system for an electric railway according to claim 1.

The present invention can suppress, for example, the generation of the excessive rail-to-ground voltage at the distant place from the voltage control device due to the spread of the fluctuation of the rail-to-ground voltage at the activated position of the voltage control device to the entire train line.

BRIEF DESCRIPTION OF THE DRAWINGS

FIG. 1 is a drawing for describing a problem in a conventional technique;
FIG. 2 is a block diagram of a rail-to-ground voltage suppression system according to a first embodiment of the present invention;
FIG. 3 is a block diagram of a voltage control device according to the first embodiment of the present invention;
FIG. 4 is a flowchart illustrating a process in a voltage determination unit according to the first embodiment of the present invention;
FIG. 5 is a drawing for describing an effect of the first embodiment of the present invention;
FIG. 6 is a block diagram of a rail-to-ground voltage suppression system according to a second embodiment of the present invention;
FIG. 7 is a block diagram of a voltage control device according to the second embodiment of the present invention;
FIG. 8 is a flowchart illustrating a process in a voltage determination unit according to the second embodiment of the present invention;

FIG. 9 is a drawing for describing an effect of the second embodiment of the present invention;

FIG. 10 is a drawing for describing an effect of the second embodiment of the present invention;

FIG. 11 is a block diagram of a rail-to-ground voltage suppression system according to a third embodiment of the present invention;

FIG. 12 is a block diagram of a voltage control device according to the third embodiment of the present invention;

FIG. 13 is a flowchart illustrating a process in a voltage determination unit according to the third embodiment of the present invention;

FIG. 14 is a drawing for describing an effect of the third embodiment of the present invention;

FIG. 15 is a block diagram of a rail-to-ground voltage suppression system according to a fourth embodiment of the present invention;

FIG. 16 is a block diagram of a voltage control device according to the fourth embodiment of the present invention;

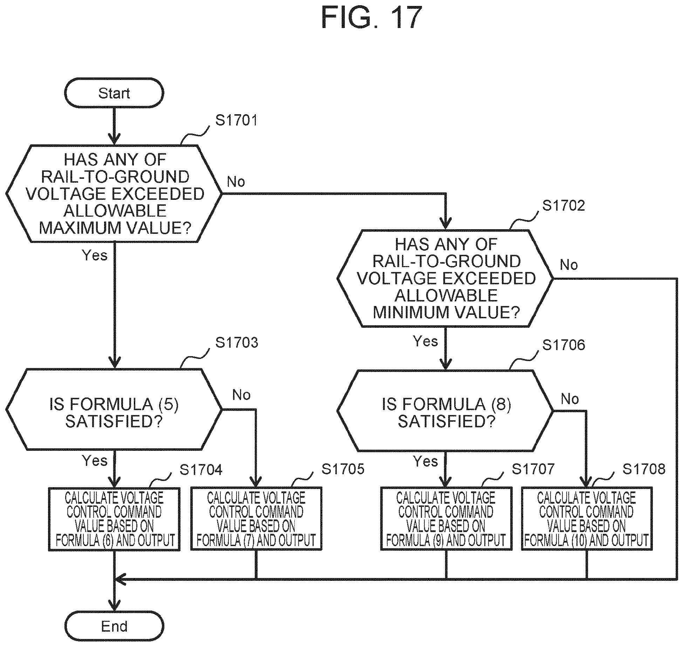

FIG. 17 is a flowchart illustrating a process in a voltage determination unit according to the fourth embodiment of the present invention; and

FIG. 18 is a drawing for describing an effect of the fourth embodiment of the present invention.

DETAILED DESCRIPTION

The following describes preferred embodiments of the present invention. In the following description, the same reference numerals are attached to the same or similar elements and processes, differences are described, and repeated explanations are omitted. In the embodiments described later, differences from the previously described embodiments are described and repeated explanations are omitted.

The configurations and the processes indicated by the following description and the respective diagrams are merely examples of an outline of the embodiment necessary for understanding and exploitation of the present invention, and not intended to limit the aspects of the present invention.

<Problem in Conventional Technique>

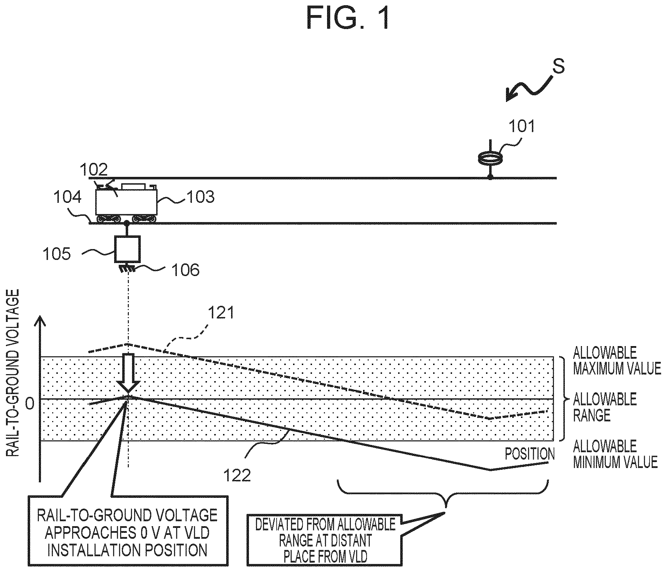

Before the description of the embodiments, the problem in the conventional technique will be described. FIG. 1 is a drawing for describing a problem in the conventional technique. FIG. 1 illustrates an outline of a rail-to-ground voltage suppression system S according to the conventional technique. The rail-to-ground voltage suppression system S according to the conventional technique includes a VLD 105.

A train 103 and an electrical substation 101 are each connected to an overhead line 102 and a rail 104, and a current flows through the overhead line 102 as a positive electrode side and the rail 104 as a negative electrode, thus supplying an electric power from the electrical substation 101 to the train 103. The rail 104 is connected to a ground electrode 106 via the VLD 105. The VLD 105 short circuits between the rail 104 and the ground electrode 106 when a voltage exceeding a predetermined value is generated between the rail 104 and the ground electrode 106.

As indicated by a dotted line 121 in a lower drawing of FIG. 1, the rail-to-ground voltage deviates from an allowable range at an activated position of the VLD 105. Then, when the VLD 105 is activated to bring the rail-to-ground voltage at the activated position close to 0 V as indicated by a solid line 122, the rail-to-ground voltage is similarly suppressed also at positions other than the activated position. Therefore, as illustrated in the lower drawing of FIG. 1, there is a problem in that the rail-to-ground voltage deviates from the allowable range to become excessive at positions farther than a predetermined position with respect to the activated position.

First Embodiment

<Configuration of Rail-to-Ground Voltage Suppression System 1S According to First Embodiment>

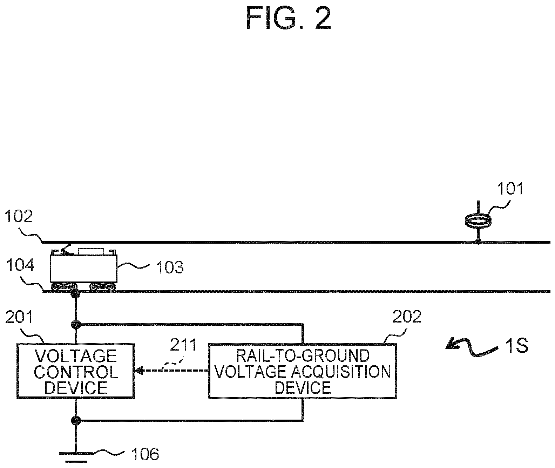

FIG. 2 is a block diagram of a rail-to-ground voltage suppression system 1S according to the first embodiment of the present invention. The rail-to-ground voltage suppression system 1S for an electric railway includes a voltage control device 201 and a rail-to-ground voltage acquisition device 202.

The voltage control device 201 connects the rail 104 and the ground electrode 106, and controls a voltage between the rail 104 and the ground electrode 106. Details of the voltage control device 201 will be described later. The rail-to-ground voltage acquisition device 202 acquires the voltage between the rail 104 and the ground electrode 106, and outputs it as a rail-to-ground voltage 211 to the voltage control device 201.

<Configuration of Voltage Control Device 201 According to First Embodiment>

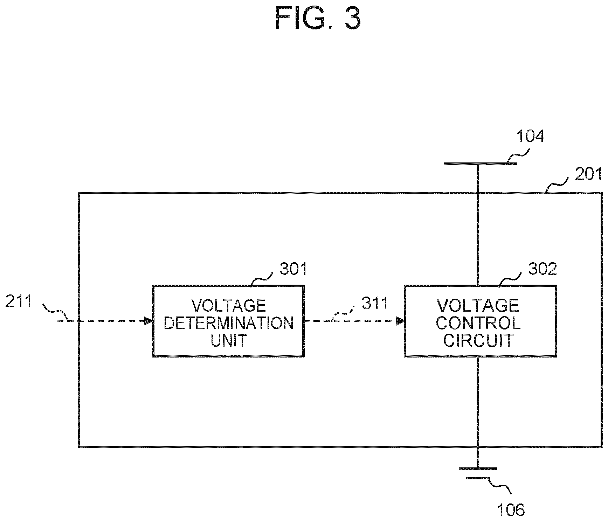

FIG. 3 is a block diagram of the voltage control device 201 according to the first embodiment of the present invention. The voltage control device 201 includes a voltage determination unit 301 and a voltage control circuit 302. The voltage determination unit 301 receives the rail-to-ground voltage 211 and outputs a voltage control command value 311. Details of a process in the voltage determination unit 301 will be described later.

The voltage control circuit 302 receives the voltage control command value 311, and controls the voltage between the rail 104 and the ground electrode 106. For example, the voltage control circuit 302 includes a variable resistor having a function to feed back the voltage between the rail 104 and the ground electrode 106, and employs a method in which a resistance value of the variable resistor is controlled such that the voltage between the rail 104 and the ground electrode 106 has the voltage control command value 311.

The voltage control circuit 302 only needs to have a system configuration that can control the voltage between the rail 104 and the ground electrode 106. For example, the voltage control circuit 302 may include a bidirectional chopper that has a function to feed back a voltage, and employ a method to control an apparent resistance value by adjusting a conduction ratio of the chopper such that the voltage between the rail 104 and the ground electrode 106 has the voltage control command value 311. The bidirectional chopper is an example, and any device configured to bidirectionally step down a voltage may be employed.

<Process in Voltage Determination Unit 301 According to First Embodiment>

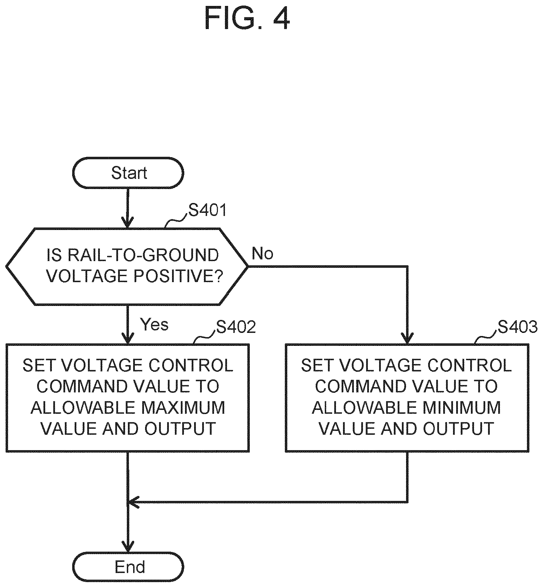

FIG. 4 is a flowchart illustrating a process in the voltage determination unit 301 according to the first embodiment of the present invention. Execution of the process illustrated in FIG. 4 is triggered by detection of the deviation of the rail-to-ground voltage 211 from the allowable range by the voltage determination unit 301.

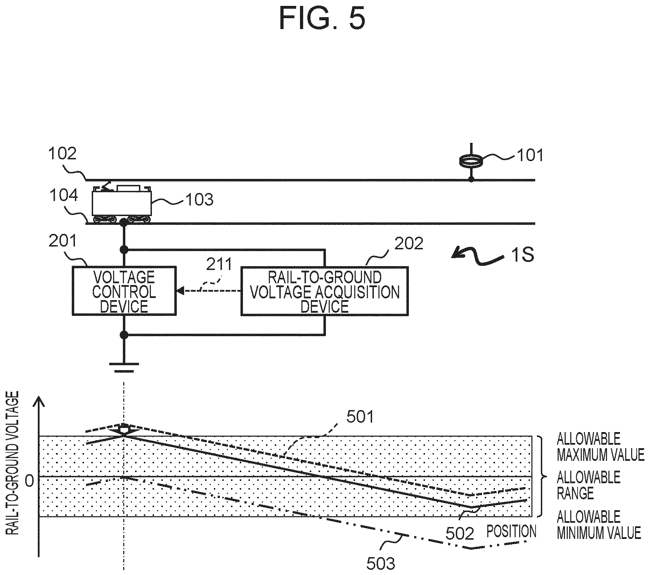

At first, in Step S401, the voltage determination unit 301 determines the rail-to-ground voltage 211 to be positive or negative, advances the process to Step S402 in the case of being positive (Yes, in Step S401), and advances the process to Step S403 in the case of being negative (No, in Step S401). In Step S402, the voltage determination unit 301 sets the voltage control command value 311 to an allowable maximum value (see FIG. 5) in the allowable range of the rail-to-ground voltage 211, and outputs it. Meanwhile, in Step S403, the voltage determination unit 301 sets the voltage control command value 311 to an allowable minimum value (see FIG. 5) in the allowable range of the rail-to-ground voltage 211, and outputs it.

<Effect of First Embodiment>

FIG. 5 is a drawing for describing the effect of the first embodiment of the present invention. In FIG. 5, a dotted line 501 indicates the rail-to-ground voltage before activating the rail-to-ground voltage suppression system 1S. A solid line 502 indicates the rail-to-ground voltage in a state where the rail-to-ground voltage suppression system 1S is activated. A two-dot chain line 503 indicates the rail-to-ground voltage assuming that the VLD of the conventional technique is activated at the position of the voltage control device 201.

While the two-dot chain line 503 indicates that the rail-to-ground voltage falls below the allowable minimum value at a position apart from the rail-to-ground voltage suppression system 1S, the solid line 502 indicates that the reduction amount of the rail-to-ground voltage at the position of the rail-to-ground voltage suppression system 1S is reduced to be minimum and the rail-to-ground voltage is kept within the allowable range also at the position apart from the rail-to-ground voltage suppression system 1S.

As described above, according to the embodiment, the deviation of the rail-to-ground voltage from the allowable range can be avoided at the position apart from the rail-to-ground voltage suppression system 1S.

<Modification of First Embodiment>

In this embodiment, the example in which one pair of the voltage control device 201 and the rail-to-ground voltage acquisition device 202 is installed in the train line is indicated. However, a plurality of pairs can be installed to individually control the rail-to-ground voltage 211 at respective installation positions. For example, even when the rail-to-ground voltage simultaneously exceeds the allowable maximum value at one installation position and falls below the allowable minimum value at another installation position, the similar effect can be provided.

Second Embodiment

<Configuration of Rail-to-Ground Voltage Suppression System 2S According to Second Embodiment>

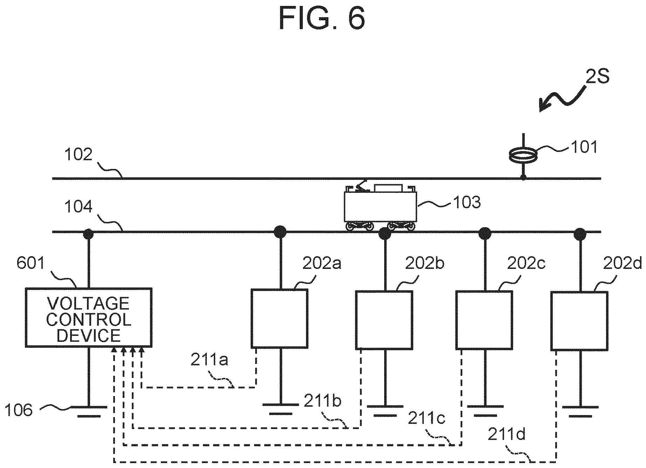

FIG. 6 is a block diagram of a rail-to-ground voltage suppression system 2S according to the second embodiment of the present invention. The rail-to-ground voltage suppression system 2S includes a voltage control device 601 and a plurality of rail-to-ground voltage acquisition devices 202a, 202b, 202c, and 202d.

The voltage control device 601 receives rail-to-ground voltages 211a, 211b, 211c, and 211d from the plurality of rail-to-ground voltage acquisition devices 202a, 202b, 202c, and 202d, respectively, and controls the voltage between the rail 104 and the ground electrode 106. Details of the voltage control device 601 will be described later.

The rail-to-ground voltage acquisition devices 202a, 202b, 202c, and 202d are the same as the rail-to-ground voltage acquisition device 202 described in the first embodiment, thus omitting the description.

<Configuration of Voltage Control Device 601 According to Second Embodiment>

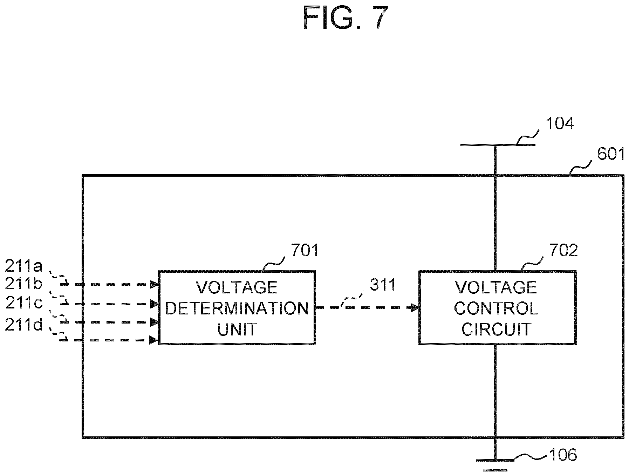

FIG. 7 is a block diagram of the voltage control device 601 according to the second embodiment of the present invention. The voltage control device 601 includes a voltage determination unit 701 and a voltage control circuit 702.

The voltage determination unit 701 receives the rail-to-ground voltages 211a, 211b, 211c, and 211d, and outputs the voltage control command value 311. Details of a process in the voltage determination unit 701 will be described later. The voltage control circuit 702 receives the voltage control command value 311 and controls an electric potential difference between the rail 104 and the ground electrode 106. The voltage control circuit 702 includes a converter configured to bidirectionally step up/down a voltage. The converter configured to bidirectionally step up/down a voltage is an example, and any device configured to bidirectionally step up/down a voltage may be employed.

<Process in Voltage Determination Unit 701 According to Second Embodiment>

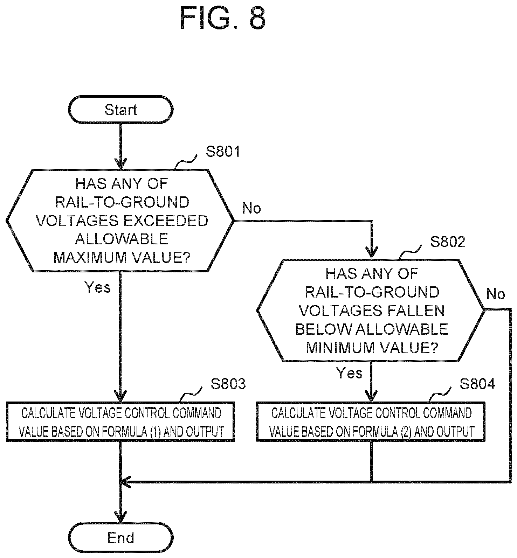

FIG. 8 is a flowchart illustrating a process in the voltage determination unit 701 according to the second embodiment of the present invention. The process illustrated in FIG. 8 is regularly executed. At first, in Step S801, the voltage determination unit 701 determines whether any of the rail-to-ground voltages 211a, 211b, 211c, and 211d has exceeded the allowable maximum value in the allowable range or not. When any of the rail-to-ground voltages 211a, 211b, 211c, and 211d has exceeded the allowable maximum value in the allowable range (Yes, in Step S801), the voltage determination unit 701 advances the process to Step S803, and advances the process to Step S802 in the other case.

In Step S802, the voltage determination unit 701 determines whether any of the rail-to-ground voltages 211a, 211b, 211c, and 211d has fallen below the allowable minimum value in the allowable range or not. When any of the rail-to-ground voltages 211a, 211b, 211c, and 211d has fallen below the allowable minimum value in the allowable range (Yes, in S802), the voltage determination unit 701 advances the process to Step S804, and the process in the voltage determination unit 701 according to the second embodiment ends in the other case.

In Step S803, the voltage determination unit 701 calculates the voltage control command value 311 (voltage control command value $V_S$) based on a formula (1) below and outputs it.

$$V_S = V_D - (V_{Max} - V_{AlMax}) \quad \dots \quad (1)$$

$V_S$: voltage control command value
$V_D$: rail-to-ground voltage at voltage control device position
$V_{Max}$: acquired rail-to-ground voltage maximum value
$V_{AlMax}$: rail-to-ground voltage allowable maximum value

In Step S804, the voltage determination unit 701 calculates the voltage control command value 311 (voltage control command value $V_S$) based on a formula (2) below and outputs it.

$$V_S = V_D + (V_{AlMin} - V_{Min}) \quad \dots \quad (2)$$

$V_S$: voltage control command value
$V_D$: rail-to-ground voltage at voltage control device position
$V_{Min}$: acquired rail-to-ground voltage minimum value
$V_{AlMin}$: rail-to-ground voltage allowable minimum value

While a process group of Steps S801 and S803 is executed with priority to a process group of Steps S802 and S804 in FIG. 8, this should not be construed in a limiting sense. That is, the process group of Steps S802 and S804 may be executed with priority to the process group of Steps S801 and S803.

<Effect of Second Embodiment>

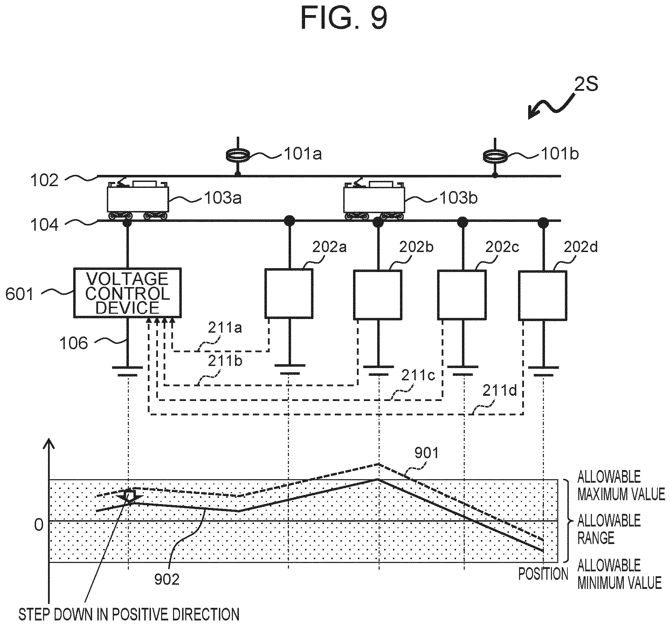

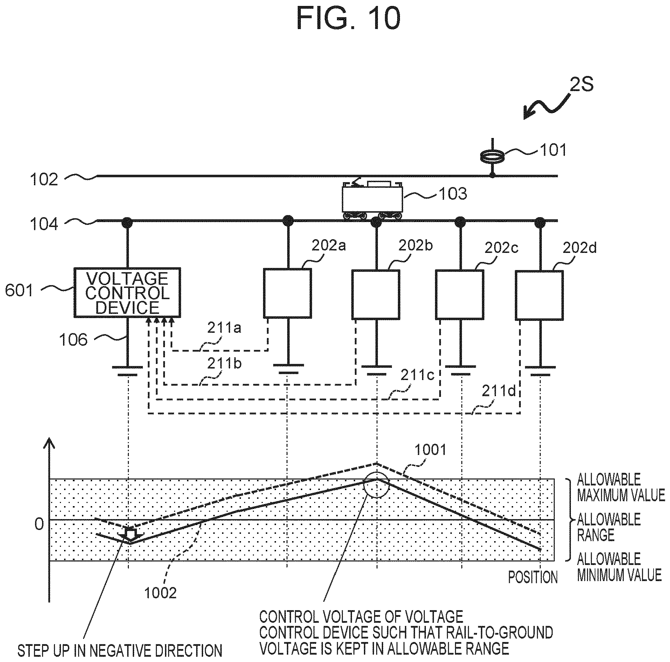

FIG. 9 and FIG. 10 are drawings for describing the effect of the second embodiment of the present invention. In the second embodiment, the voltage control by the voltage control device 601 includes the following four patterns.

Pattern 1: a case where any of the rail-to-ground voltages exceeds the allowable maximum value and the rail-to-ground voltage at the voltage control device position has a positive sign.
Pattern 2: a case where any of the rail-to-ground voltages exceeds the allowable maximum value and the rail-to-ground voltage at the voltage control device position has a negative sign.
Pattern 3: a case where any of the rail-to-ground voltages falls below the allowable minimum value and the rail-to-ground voltage at the voltage control device position has a positive sign.
Pattern 4: a case where any of the rail-to-ground voltages falls below the allowable minimum value and the rail-to-ground voltage at the voltage control device position has a negative sign.

At first, the effect provided in the situation of the pattern 1 in this embodiment will be described by referring to FIG. 9. FIG. 9 illustrates an example in which the sign of the rail-to-ground voltage at the position at which the rail-to-ground voltage deviates from the allowable range matches the sign of the rail-to-ground voltage at the voltage control device position.

A dotted line 901 indicates the rail-to-ground voltage when the voltage control by the voltage control device 601 is not performed, and the rail-to-ground voltage at the position of the rail-to-ground voltage acquisition device 202b exceeds the allowable maximum value. A solid line 902 indicates the rail-to-ground voltage when a step-down control is performed in accordance with the control described in this embodiment, and the rail-to-ground voltage at the installation position of the rail-to-ground voltage acquisition device 202b is kept in the allowable range.

Thus, the rail-to-ground voltage acquisition devices 202a, 202b, 202c, and 202d are installed at the positions apart from the voltage control device 601, and when the rail-to-ground voltage acquired by any of the rail-to-ground voltage acquisition devices deviates from the allowable range, the step-down control of the voltage of the voltage control device 601 is performed so as to keep the rail-to-ground voltage at the position of deviating from the allowable range in the allowable range. Accordingly, the rail-to-ground voltage in a wide range can be kept in the allowable range by one voltage control device.

Note that since the pattern 3 is a pattern in which the pattern 1 has the inverted signs, the illustration and the description are omitted.

Next, the effect provided in the situation of the pattern 2 in this embodiment will be described by referring to FIG. 10. FIG. 10 illustrates an example in which the sign of the rail-to-ground voltage at the position at which the rail-to-ground voltage deviates from the allowable range does not match the sign of the rail-to-ground voltage at the voltage control device position.

A dotted line 1001 indicates the rail-to-ground voltage when the voltage control by the voltage control device 601 is not performed, and the rail-to-ground voltage at the position of the rail-to-ground voltage acquisition device 202b exceeds the allowable maximum value. A solid line 1002 indicates the rail-to-ground voltage when a step-up control in the negative direction is performed in accordance with the control described in this embodiment, and the rail-to-ground voltage of the rail-to-ground voltage acquisition device 202b is kept in the allowable range.

Thus, the rail-to-ground voltage acquisition devices 202a, 202b, 202c, and 202d are installed at the positions apart from the voltage control device position, and further, the voltage control circuit 702 includes the converter configured to bidirectionally step up/down the voltage. This allows the reduction of the rail-to-ground voltage even when the sign of the rail-to-ground voltage at the position at which the rail-to-ground voltage deviates from the allowable range does not match the sign of the rail-to-ground voltage at the voltage control device position. In addition, the rail-to-ground voltage in the wider range can be kept in the allowable range by one voltage control device.

Note that since the pattern 4 is a pattern in which in the pattern 2 has the inverted signs, the illustration and the description are omitted.

<Modification of Second Embodiment>

While the example in which the four rail-to-ground voltage acquisition devices 202a, 202b, 202c, and 202d are installed is described in this embodiment, the number of the rail-to-ground voltage acquisition devices is not limited thereto. The rail-to-ground voltage acquisition devices 202a, 202b, 202c, and 202d do not necessarily need to actually measure the rail-to-ground voltage, and for example, a configuration in which the rail-to-ground voltage is calculated to be acquired with a simulation model that calculates the rail-to-ground voltage from a train position, an electrical substation output power, and a train electric power may be employed. In this case, since the rail-to-ground voltage can be continuously calculated, the deviation of the rail-to-ground voltage from the allowable range can be reduced without fail using the rail-to-ground voltage precisely acquired at low cost compared with the case of the rail-to-ground voltage acquisition by the measurement.

While the voltage control command value 311 is obtained by the process illustrated in FIG. 8 in this embodiment, the voltage control command value 311 may be determined by a feedback of the rail-to-ground voltage value at the position at which the rail-to-ground voltage deviates from the allowable range and performing a PID control so as to keep the rail-to-ground voltage value in the allowable range.

Third Embodiment

<Configuration of Rail-to-Ground Voltage Suppression System 3S According to Third Embodiment>

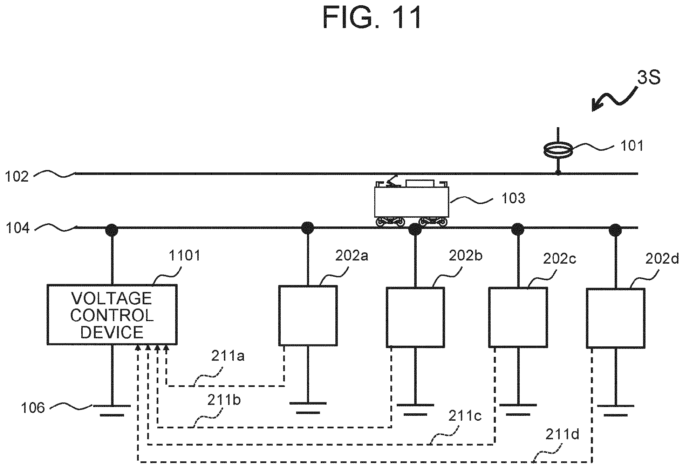

FIG. 11 is a block diagram of a rail-to-ground voltage suppression system 3S according to the third embodiment of the present invention. Since the configuration other than a voltage control device 1101 is the same as the configuration illustrated in FIG. 6 of the second embodiment, the description will be omitted.

The voltage control device 1101 receives rail-to-ground voltages 211a, 211b, 211c, and 211d from the plurality of rail-to-ground voltage acquisition devices 202a, 202b, 202c, and 202d, respectively, and controls the voltage between the rail 104 and the ground electrode 106. Details of the voltage control device 1101 will be described later.

<Configuration of Voltage Control Device 1101 According to Third Embodiment>

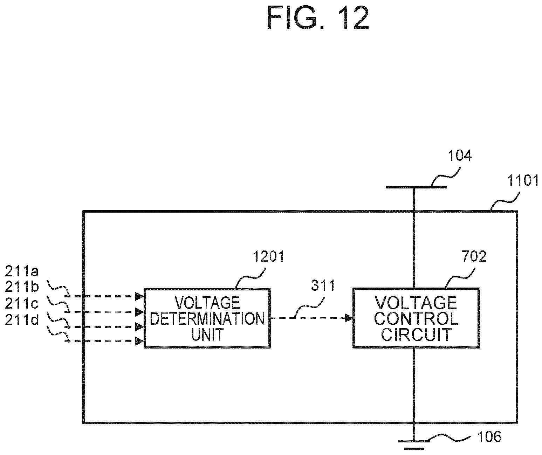

FIG. 12 is a block diagram of the voltage control device 1101 according to the third embodiment of the present invention. The voltage control device 1101 includes a voltage determination unit 1201 and the voltage control circuit 702. Since the configuration other than the voltage determination unit 1201 is the same as that of the voltage control device 601 of the second embodiment, the description will be omitted. The voltage determination unit 1201 receives the rail-to-ground voltages 211a, 211b, 211c, and 211d, and outputs the voltage control command value 311.

<Process in Voltage Determination Unit 1201 According to Third Embodiment>

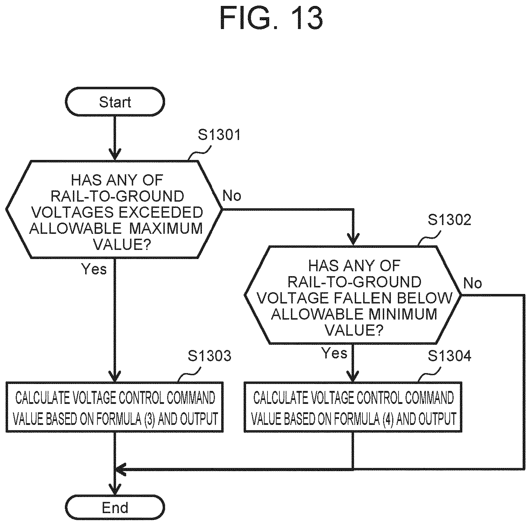

FIG. 13 is a flowchart illustrating a process in the voltage determination unit 1201 according to the third embodiment of the present invention. The process illustrated in FIG. 13 is regularly executed.

At first, in Step S1301, the voltage determination unit 1201 determines whether any of the rail-to-ground voltages 211a, 211b, 211c, and 211d has exceeded the allowable maximum value in the allowable range or not. When any of the rail-to-ground voltages 211a, 211b, 211c, and 211d has exceeded the allowable maximum value in the allowable range (Yes, in Step S1301), the voltage determination unit 1201 advances the process to Step S1303, and advances the process to Step S1302 in the other case.

In Step S1302, the voltage determination unit 1201 determines whether any of the rail-to-ground voltages 211a, 211b, 211c, and 211d has fallen below the allowable minimum value in the allowable range or not. When any of the rail-to-ground voltages 211a, 211b, 211c, and 211d has fallen below the allowable minimum value in the allowable range (Yes, in S1302), the voltage determination unit 1201 advances the process to Step S1204, and the process in the voltage determination unit 1201 according to the third embodiment ends in the other case.

In Step S1303, the voltage determination unit 1201 calculates the voltage control command value 311 (voltage control command value $V_S$) based on a formula (3) below such that a difference between the maximum value and the allowable maximum value of the rail-to-ground voltage becomes the same as a difference between the minimum value and the allowable minimum value of the rail-to-ground voltage, and outputs it.

$$V_S = V_D - (V_{Max} - V_{TMax}) \ ... \ (3)$$

$$V_{TMax} = V_{AlMax} - \{(V_{AlMax} - V_{AlMin}) - (V_{Max} - V_{Min})\}/2$$

$V_S$: voltage control command value
$V_D$: rail-to-ground voltage at voltage control device position
$V_{AlMax}$: rail-to-ground voltage allowable maximum value
$V_{TMax}$: target value of rail-to-ground voltage maximum value
$V_{Max}$: acquired rail-to-ground voltage maximum value
$V_{AlMin}$: rail-to-ground voltage allowable minimum value
$V_{Min}$: acquired rail-to-ground voltage minimum value

In Step S1304, the voltage determination unit 1201 calculates the voltage control command value 311 (voltage control command value $V_S$) based on a formula (4) below such that the difference between the maximum value and the allowable maximum value of the rail-to-ground voltage becomes the same as the difference between the minimum value and the allowable minimum value of the rail-to-ground voltage, and outputs it.

$$V_S = V_D + (V_{TMin} - V_{AlMin}) \ \dots \ (4)$$

$$V_{TMin} = V_{AlMin} + \{(V_{AlMax} - V_{AlMin}) - (V_{Max} - V_{Min})\}/2$$

$V_S$: voltage control command value
$V_D$: rail-to-ground voltage at voltage control device position
$V_{AlMax}$: rail-to-ground voltage allowable maximum value
$V_{TMin}$: target value of rail-to-ground voltage minimum value
$V_{Max}$: acquired rail-to-ground voltage maximum value
$V_{AlMin}$: rail-to-ground voltage allowable minimum value
$V_{Min}$: acquired rail-to-ground voltage minimum value

<Effect of Third Embodiment>

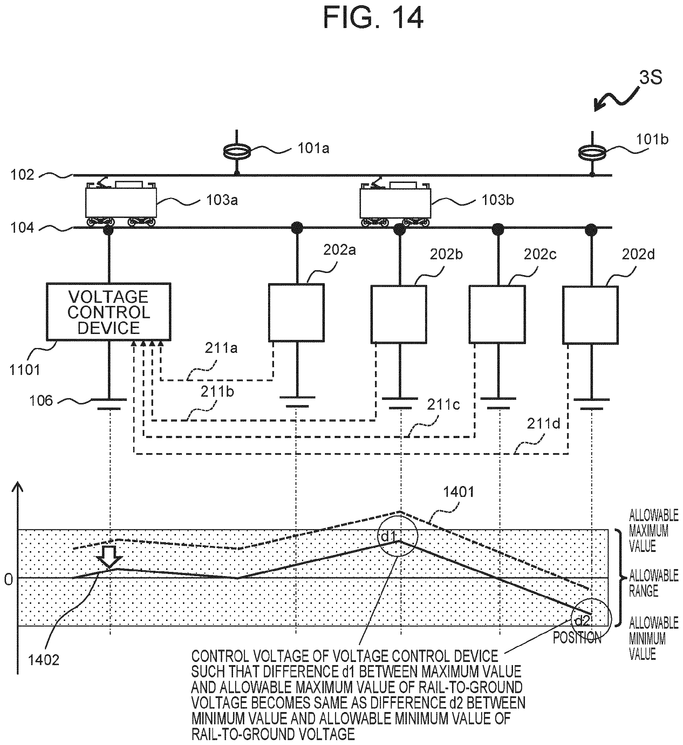

FIG. 14 is a drawing for describing the effect of the third embodiment of the present invention. A dotted line 1401 indicates the rail-to-ground voltage when the voltage control by the voltage control device 1101 is not performed, and the rail-to-ground voltage at the position of the rail-to-ground voltage acquisition device 202b exceeds the allowable maximum value. A solid line 1402 indicates the rail-to-ground voltage when a step-down control is performed in accordance with the control described in this embodiment, and the rail-to-ground voltage of the rail-to-ground voltage acquisition device 202b is kept in the allowable range and further has a value smaller than the allowable maximum value.

As illustrated in FIG. 14, a difference d1 between the allowable maximum value and the rail-to-ground voltage 211b of the rail-to-ground voltage acquisition device 202b is equal to a difference d2 between the rail-to-ground voltage 211d of the rail-to-ground voltage acquisition device 202d and the allowable minimum value. By controlling the voltage control device 1101 in this manner, a sum of absolute values of the rail-to-ground voltages in the entire train line can be decreased, thereby allowing more reducing the risk possibly caused by the rail-to-ground voltage.

Fourth Embodiment

<Configuration of Rail-to-Ground Voltage Suppression System 4S According to Fourth Embodiment>

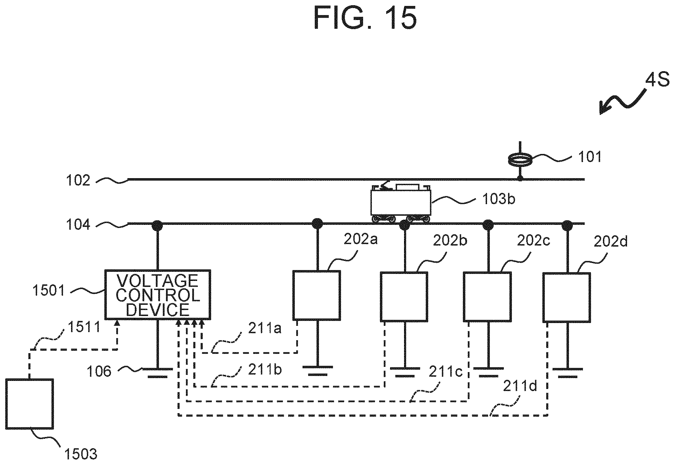

FIG. 15 is a block diagram of a rail-to-ground voltage suppression system 4S according to the fourth embodiment of the present invention. The rail-to-ground voltage suppression system 4S includes a voltage control device 1501, the rail-to-ground voltage acquisition devices 202a, 202b, 202c, and 202d, and a protection target area setting unit 1503. Since the rail-to-ground voltage acquisition devices 202a, 202b, 202c, and 202d are the same as those illustrated in FIG. 6 of the second embodiment, the description will be omitted.

The voltage control device 1501 receives rail-to-ground voltages 211a, 211b, 211c, and 211d from the plurality of rail-to-ground voltage acquisition devices 202a, 202b, 202c, and 202d. The voltage control device 1501 receives protection target area setting information 1511 from the protection target area setting unit 1503. The voltage control device 1501 controls the voltage between the rail 104 and the ground electrode 106 based on these inputs. Details of the voltage control device 1501 will be described later.

The protection target area setting unit 1503 sets a position or a section to suppress the increase of the rail-to-ground voltage to a protection target area, and outputs the protection target area setting information 1511 to the voltage control device 1501. The protection target area is a position or a section set to the rail 104 to protect a human and the like from an electric shock by suppressing a rail-to-ground voltage average value to a predetermined value (for example, 0 V or a value of the predetermined value or less).

<Configuration of Voltage Control Device 1501 According to Fourth Embodiment>

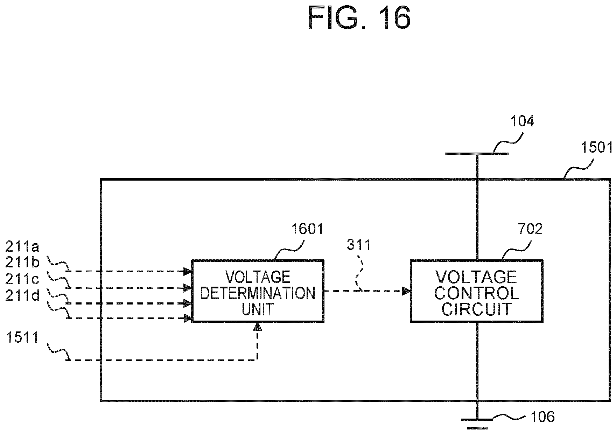

FIG. 16 is a block diagram of the voltage control device 1501 according to the fourth embodiment of the present invention. The voltage control device 1501 includes a voltage determination unit 1601 and the voltage control circuit 702. Since the configuration other than the voltage determination unit 1601 is the same as that of the voltage control device 601 of the second embodiment, the description will be omitted. The voltage determination unit 1601 receives the rail-to-ground voltages 211a, 211b, 211c, and 211d and the protection target area setting information 1511, and outputs the voltage control command value 311.

<Process in Voltage Determination Unit 1601 According to Fourth Embodiment>

FIG. 16 is a flowchart illustrating a process in the voltage determination unit 1601 according to the fourth embodiment of the present invention. The process illustrated in FIG. 16 is regularly executed.

At first, in Step S1701, the voltage determination unit 1601 determines whether any of the rail-to-ground voltages 211a, 211b, 211c, and 211d has exceeded the allowable maximum value or not. When any of the rail-to-ground voltages 211a, 211b, 211c, and 211d has exceeded the allowable maximum value (Yes, in Step S1701), the voltage determination unit 1601 advances the process to Step S1703, and advances the process to Step S1702 in the other case.

In Step S1702, the voltage determination unit 1601 determines whether any of the rail-to-ground voltages 211a, 211b, 211c, and 211d has fallen below the allowable minimum value or not. When any of the rail-to-ground voltages 211a, 211b, 211c, and 211d has fallen below the allowable minimum value (Yes, in S1702), the voltage determination unit 1601 advances the process to Step S1706, and the process in the voltage determination unit 1601 according to the fourth embodiment ends in the other case.

In Step S1703, the voltage determination unit 1601 determines whether a formula (5) below is satisfied or not. When the formula (5) below is satisfied (Yes, in Step S1703), the voltage determination unit 1601 advances the process to Step S1704, and when the formula (5) below is not satisfied (No, in Step S1703), the voltage determination unit 1601 advances the process to Step S1705.

$$V_H - (V_{Max} - V_{AlMax}) < 0 \dots (5)$$

$V_H$: rail-to-ground voltage average value of protection target area
$V_{AlMax}$: rail-to-ground voltage allowable maximum value
$V_{Max}$: rail-to-ground voltage maximum value

Step S1704 is executed when Step S1703 is Yes, that is, a value obtained by subtracting the difference between the maximum value and the allowable maximum value of the rail-to-ground voltage from the rail-to-ground voltage average value of the protection target area set by the protection target area setting unit 1503 is negative. At this time, the rail-to-ground voltage decreased more than necessary causes the rail-to-ground voltage of the protection target area to become apart from 0 V to be small. That is, the absolute value of the rail-to-ground voltage increases. Therefore, in Step S1704, the voltage determination unit 1601 calculates the voltage control command value 311 (voltage control command value $V_S$) based on a formula (6) below so as to suppress the reduction amount of the rail-to-ground voltage to a minimum, and outputs it.

$$V_S = V_D - (V_{Max} - V_{AlMax}) \dots (6)$$

$V_S$: voltage control command value
$V_D$: rail-to-ground voltage at voltage control device position
$V_{AlMax}$: rail-to-ground voltage allowable maximum value
$V_{Max}$: rail-to-ground voltage maximum value

Meanwhile, Step S1705 is executed when Step S1703 is No, that is, the value obtained by subtracting the difference between the maximum value and the allowable maximum value of the rail-to-ground voltage from the rail-to-ground voltage average value of the protection target area set by the protection target area setting unit 1503 is positive. At this time, as the rail-to-ground voltage is decreased, the rail-to-ground voltage average value of the protection target area can be approached to 0 V. Therefore, in Step S1705, the voltage determination unit 1601 calculates the voltage control command value $V_S$ using a formula (7) below so as to make the rail-to-ground voltage average value of the protection target area 0 V, and outputs it.

$$V_S = V_D - V_H \dots (7)$$

$V_S$: voltage control command value
$V_D$: rail-to-ground voltage at voltage control device position
$V_H$: rail-to-ground voltage average value of protection target area

Meanwhile, in Step S1706, the voltage determination unit 1601 determines whether a formula (8) below is satisfied or not. When the formula (8) below is satisfied (Yes, in Step S1706), the voltage determination unit 1601 advances the process to Step S1707, and when the formula (8) below is not satisfied (No, in Step S1706), the voltage determination unit 1601 advances the process to Step S1708.

$$V_H + (V_{AlMin} - V_{Min}) \geq 0 \ ... \ (8)$$

$V_H$: rail-to-ground voltage average value of protection target area
$V_{Min}$: rail-to-ground voltage minimum value
$V_{AlMin}$: rail-to-ground voltage allowable minimum value

Step S1707 is executed when Step S1706 is Yes, that is, a value obtained by adding the difference between the allowable minimum value and the minimum value of the rail-to-ground voltage to the rail-to-ground voltage average value of the protection target area set by the protection target area setting unit 1503 is 0 or more. At this time, the rail-to-ground voltage increased more than necessary causes the rail-to-ground voltage of the protection target area to become apart from 0 V to be large. That is, the absolute value of the rail-to-ground voltage increases. Therefore, in Step S1707, the voltage determination unit 1601 calculates the voltage control command value $V_S$ based on a formula (9) below so as to suppress the increased amount of the rail-to-ground voltage to a minimum, and outputs it.

$$V_S = V_D + (V_{AlMin} - V_{Min}) \ ... \ (9)$$

$V_S$: voltage control command value
$V_D$: rail-to-ground voltage at voltage control device position
$V_{Min}$: rail-to-ground voltage minimum value
$V_{AlMin}$: rail-to-ground voltage allowable minimum value

Meanwhile, Step S1708 is executed when Step S1706 is No, that is, a value obtained by adding the difference between the allowable minimum value and the minimum value of the rail-to-ground voltage to the rail-to-ground voltage average value of the protection target area set by the protection target area setting unit 1503 is negative. At this time, as the rail-to-ground voltage is increased, the rail-to-ground voltage average value of the protection target area can be approached to 0 V. Therefore, in Step S1708, the voltage determination unit 1601 calculates the voltage control command value $V_S$ based on a formula (10) below so as to make the rail-to-ground voltage average value of the protection target area 0 V, and outputs it.

$$V_S = V_D + V_H \ ... \ (10)$$

$V_S$: voltage control command value
$V_D$: rail-to-ground voltage at voltage control device position
$V_H$: rail-to-ground voltage average value of protection target area

<Effect of Fourth Embodiment>

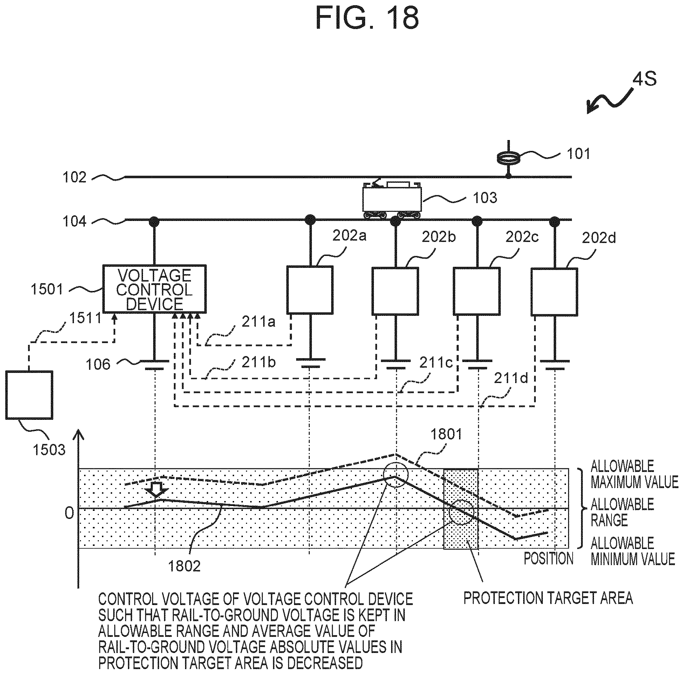

FIG. 18 is a drawing for describing the effect of the fourth embodiment of the present invention. A dotted line 1801 indicates the rail-to-ground voltage when the voltage control by the voltage control device 1501 is not performed, and the rail-to-ground voltage at the position of the rail-to-ground voltage acquisition device 202b exceeds the allowable maximum value. A solid line 1802 indicates the rail-to-ground voltage when a step-down control is performed in accordance with the control described in this embodiment, and the rail-to-ground voltage of the rail-to-ground voltage acquisition device 202b is kept in the allowable range, and further, the rail-to-ground voltage average value of the protection target area is 0 V. By controlling the voltage control device 1501 in this manner, the rail-to-ground voltage of the protection target area can be decreased while keeping the rail-to-ground voltage in the allowable range, thereby allowing more reducing the risk of an electric shock due to the rail-to-ground voltage.

<Modification of Fourth Embodiment>

While the case where only one protection target area is set is described in this embodiment, a plurality of the protection target areas may be set. In this case, the control may be performed in a manner in which a priority order is given to the protection target area, and the rail-to-ground voltage average value of the protection target area having the high priority order is suppressed to a predetermined value. Alternatively, the control may be performed in a manner in which a sum of the rail-to-ground voltage average values of the plurality of protection target areas is suppressed to a predetermined value.

While the example in which the rail-to-ground voltage average value of the protection target area is decreased is described in this embodiment, the control may be performed in a manner in which the rail-to-ground voltage of the protection target area is suppressed by decreasing the maximum value, the minimum value, or the like not limiting to the average value.

<Modification of First to Fourth Embodiments>

While the description is omitted in the above-described first to fourth embodiments, a plurality of the voltage control devices may be disposed in the train line. In this case, the voltage control device at the position closest to a rail-to-ground voltage acquisition device having the rail-to-ground voltage deviating from the allowable range controls the rail-to-ground voltage at the installation position of itself, thus allowing to avoid competing in the control.

The voltage control device of the rail-to-ground voltage having the sign the same as that of the rail-to-ground voltage deviating from the allowable range and having the maximum absolute value controls the rail-to-ground voltage at the installation position of itself, thereby maximally ensuring the reduction range of the absolute value of the rail-to-ground voltage.

It may occur that the difference between the maximum value and the minimum value of the rail-to-ground voltages detected by the plurality of rail-to-ground voltage acquisition devices is significantly large to be a predetermined value or more, and the minimum value is not kept in the allowable range when the maximum value is suppressed to the allowable maximum value. Similarly, it may occur that the maximum value is not kept in the allowable range when the minimum value is suppressed to the allowable minimum value. In this case, the voltage control device of the rail-to-ground voltages having the absolute values in both positive and negative directions that are each the predetermined value (for example, the maximum value) or more controls the rail-to-ground voltage at the installation position of itself, thereby allowing keeping the maximum value and the minimum value of the rail-to-ground voltages in the allowable range.

**Claims**

1. A rail-to-ground voltage suppression system for an electric railway, comprising:

   one or a plurality of rail-to-ground voltage acquisition devices (202) that each acquires a rail-to-ground voltage (211); and
   a voltage control device (201, 601, 1101, 1501) that connects a rail (104) and a ground electrode (106),
   **characterized in that**:

   the voltage control device (201, 601, 1101, 1501) includes a voltage determination unit (301, 701, 1201, 1601) that receives the rail-to-ground voltage (211) and outputs a voltage control command value (311), and further includes a voltage control circuit (302, 702) that receives the voltage control command value, and controls the voltage between the rail and the ground electrode, wherein the voltage control circuit includes a variable resistor device configured to feed back the voltage between the rail and the ground electrode, and controls an actual or apparent resistance value of the variable resistor device such that the voltage between the rail and the ground electrode has the voltage control command value, wherein
   when the rail-to-ground voltage (211) acquired by any of the rail-to-ground voltage acquisition devices (202) at an installation position of the rail-to-ground voltage acquisition device deviates from an allowable range, the voltage control device (201, 601, 1101, 1501) controls the rail-to-ground voltage at the installation position of the voltage control device by connecting the rail (104) and the ground electrode (106) corresponding to the rail-to-ground voltage acquired by the rail-to-ground voltage acquisition device to keep the rail-to-ground voltage in the allowable range.

2. The rail-to-ground voltage suppression system according to claim 1, further comprising

   a protection target area setting unit (1503) that sets a protection target area to the rail, the protection target area being a target section in which the rail-to-ground voltage is suppressed, wherein
   when the rail-to-ground voltage acquired by any of the rail-to-ground voltage acquisition devices (202) at the installation position of the rail-to-ground voltage acquisition device deviates from the allowable range, the voltage control device (1501) controls the rail-to-ground voltage at the installation position of the voltage control device to further suppress the rail-to-ground voltage of the protection target area to a predetermined value.

3. The rail-to-ground voltage suppression system according to claim 2, wherein

the protection target area setting unit (1503) sets a plurality of the protection target areas while adding a priority order, and

when the rail-to-ground voltage acquired by any of the rail-to-ground voltage acquisition devices (202) at the installation position of the rail-to-ground voltage acquisition device deviates from the allowable range, the voltage control device (1501) controls the rail-to-ground voltage at the installation position of the voltage control device to suppress the rail-to-ground voltages of the protection target areas corresponding to the priority order.

4. The rail-to-ground voltage suppression system according to claim 2, wherein

the protection target area setting unit (1503) sets a plurality of the protection target areas, and

when the rail-to-ground voltage acquired by any of the rail-to-ground voltage acquisition devices (202) at the installation position of the rail-to-ground voltage acquisition device deviates from the allowable range, the voltage control device (1501) controls the rail-to-ground voltage at the installation position of the voltage control device to suppress the rail-to-ground voltages of the plurality of protection target areas.

5. The rail-to-ground voltage suppression system according to any one of claims 1 to 4, comprising

a plurality of the voltage control devices (201, 601, 1101, 1501), wherein

when the rail-to-ground voltage acquired by any of the rail-to-ground voltage acquisition devices (202) at the installation position of the rail-to-ground voltage acquisition device deviates from the allowable range, the voltage control device (201, 601, 1101, 1501) at the installation position closest to the rail-to-ground voltage acquisition device controls the rail-to-ground voltage at the installation position of the voltage control device.

6. The rail-to-ground voltage suppression system according to any one of claims 1 to 4, comprising

a plurality of the voltage control devices (201, 601, 1101, 1501), wherein

when the rail-to-ground voltage acquired by any of the rail-to-ground voltage acquisition devices (202) at the installation position of the rail-to-ground voltage acquisition device deviates from the allowable range, the voltage control device (201, 601, 1101, 1501) of the rail-to-ground voltage having a sign identical to a sign of the rail-to-ground voltage and having a maximum absolute value controls the rail-to-ground voltage at the installation position of the voltage control device.

7. The rail-to-ground voltage suppression system according to any one of claims 1 to 4, comprising

a plurality of the voltage control devices (201, 601, 1101, 1501), wherein

when the rail-to-ground voltage acquired by any of the rail-to-ground voltage acquisition devices (202) at the installation position of the rail-to-ground voltage acquisition device deviates from the allowable range and a difference between a maximum value and a minimum value of the rail-to-ground voltages acquired by the plurality of rail-to-ground voltage acquisition devices (201, 601, 1101, 1501) is a predetermined value or more, the voltage control device of the rail-to-ground voltages having absolute values of in both positive and negative directions that are each a predetermined value or more controls the rail-to-ground voltage at the installation position of the voltage control device to keep the maximum value and the minimum value in the allowable range.

**Patentansprüche**

1. Schiene-zu-Erde-Spannungsunterdrückungssystem für eine elektrische Eisenbahn, das Folgendes umfasst:

eine oder eine Vielzahl von Schiene-zu-Erde-Spannungserfassungsvorrichtungen (202), die jeweils eine Schiene-zu-Erde-Spannung (211) erfassen; und

eine Spannungssteuerungsvorrichtung (201, 601, 1101, 1501), die eine Schiene (104) und eine Erdungselektrode (106) verbindet,

**dadurch gekennzeichnet, dass**:

die Spannungssteuerungsvorrichtung (201, 601, 1101, 1501) eine Spannungsbestimmungseinheit (301, 701, 1201, 1601) umfasst, welche die Schiene-zu-Erde-Spannung (211) empfängt und einen Spannungssteuerungsbefehlswert (311) ausgibt, und außerdem einen Spannungssteuerkreis (302, 702) umfasst, der den Spannungssteuerungsbefehlswert empfängt und die Spannung zwischen der Schiene und der Erdungselektrode steuert, wobei der Spannungssteuerkreis eine veränderliche Widerstandsvorrichtung umfasst, die ausgelegt ist, um die Spannung zwischen der Schiene und der Erdungselektrode zurückzumelden und einen tatsächlichen oder scheinbaren Widerstandswert der veränderlichen Widerstandsvorrichtung steuert, sodass die Spannung zwischen der Schiene und der Erdungselektrode den Spannungssteuerungsbefehlswert aufweist, wobei

wenn die durch eine der Schiene-zu-Erde-Spannungserfassungsvorrichtungen (202) an einer Installationsposition der Schiene-zu-Erde-Spannungserfassungsvorrichtung erfasste Schiene-zu-Erde-Spannung (211) von einem zulässigen Bereich abweicht, die Spannungssteuerungsvorrichtung (201, 601, 1101, 1501) die Schiene-zu-Erde-Spannung an der Installationsposition der Spannungssteuerungsvorrichtung durch Verbinden der Schiene (104) und der Erdungselektrode (106), die der durch die Schiene-zu-Erde-Spannungsvorrichtung erfassten Schiene-zu-Erde-Spannung entspricht, steuert, um die Schiene-zu-Erde-Spannung im zulässigen Bereich zu halten.

2. Schiene-zu-Erde-Spannungsunterdrückungssystem nach Anspruch 1, das weiters Folgendes umfasst:

eine Schutzzielbereichseinstellungseinheit (1503), die einen Schutzzielbereich auf der Schiene einstellt, wobei der Schutzzielbereich ein Zielbereich ist, in dem die Schiene-zu-Erde-Spannung unterdrückt wird, wobei wenn die durch eine der Schiene-zu-Erde-Spannungserfassungsvorrichtungen (202) an der Installationsposition der Schiene-zu-Erde-Spannungserfassungsvorrichtung erfasste Schiene-zu-Erde-Spannung vom zulässigen Bereich abweicht, die Spannungssteuerungsvorrichtung (1501) die Schiene-zu-Erde-Spannung an der Installationsposition der Spannungssteuerungsvorrichtung steuert, um die Schiene-zu-Erde-Spannung des Schutzzielbereichs auf einem zulässigen Wert zu halten.

3. Schiene-zu-Erde-Spannungsunterdrückungssystem nach Anspruch 2, wobei

die Schutzzielbereichseinstellungseinheit (1503) eine Vielzahl der Schutzzielbereiche unter Hinzufügung einer Prioritätsreihenfolge einstellt und wenn die durch eine der Schiene-zu-Erde-Spannungserfassungsvorrichtungen (202) an der Installationsposition der Schiene-zu-Erde-Spannungserfassungsvorrichtung erfasste Schiene-zu-Erde-Spannung vom zulässigen Bereich abweicht, die Spannungssteuerungsvorrichtung (1501) die Schiene-zu-Erde-Spannung an der Installationsposition der Spannungssteuerungsvorrichtung steuert, um die Schiene-zu-Erde-Spannungen der Schutzzielbereiche entsprechend der Prioritätsreihenfolge zu unterdrücken.

4. Schiene-zu-Erde-Spannungsunterdrückungssystem nach Anspruch 2, wobei

die Schutzzielbereichseinstellungseinheit (1503) eine Vielzahl der Schutzzielbereiche einstellt und wenn die durch eine der Schiene-zu-Erde-Spannungserfassungsvorrichtungen (202) an der Installationsposition der Schiene-zu-Erde-Spannungserfassungsvorrichtung erfasste Schiene-zu-Erde-Spannung vom zulässigen Bereich abweicht, die Spannungssteuerungsvorrichtung (1501) die Schiene-zu-Erde-Spannung an der Installationsposition der Spannungssteuerungsvorrichtung steuert, um die Schiene-zu-Erde-Spannungen der Vielzahl von Schutzzielbereichen zu unterdrücken.

5. Schiene-zu-Erde-Spannungsunterdrückungssystem nach einem der Ansprüche 1 bis 4, das Folgendes umfasst: eine Vielzahl der Spannungssteuerungsvorrichtungen (201, 601, 1101, 1501), wobei: wenn die durch eine der Schiene-zu-Erde-Spannungserfassungsvorrichtungen (202) an der Installationsposition der Schiene-zu-Erde-Spannungserfassungsvorrichtung erfasste Schiene-zu-Erde-Spannung vom zulässigen Bereich abweicht, die Spannungssteuerungsvorrichtung (201, 601, 1101, 1501) an der am nächsten zur Schiene-zu-Erde-Spannungserfassungsvorrichtung gelegenen Installationsposition die Schiene-zu-Erde-Spannung an der Installationsposition der Spannungssteuerungsvorrichtung steuert.

6. Schiene-zu-Erde-Spannungsunterdrückungssystem nach einem der Ansprüche 1 bis 4, die Folgendes umfasst: eine Vielzahl der Spannungssteuerungsvorrichtungen (201, 601, 1101, 1501), wobei: wenn die durch eine der Schiene-zu-Erde-Spannungserfassungsvorrichtungen (202) an der Installationsposition der Schiene-zu-Erde-Spannungserfassungsvorrichtung erfasste Schiene-zu-Erde-Spannung vom zulässigen Bereich abweicht, die Spannungssteuerungsvorrichtung (201, 601, 1101, 1501) der Schiene-zu-Erde-Spannung mit einem identischen Vorzeichen wie das Vorzeichen der Schiene-zu-Erde-Spannung und mit einem maximalen Absolutwert die Schiene-zu-Erde-Spannung an der Installationsposition der Spannungssteuerungsvorrichtung steuert.

7. Schiene-zu-Erde-Spannungsunterdrückungssystem nach einem der Ansprüche 1 bis 4, das Folgendes umfasst: eine Vielzahl der Spannungssteuerungsvorrichtungen (201, 601, 1101, 1501), wobei:

wenn die durch eine der Schiene-zu-Erde-Spannungserfassungsvorrichtungen (202) an der Installationsposition der Schiene-zu-Erde-Spannungserfassungsvorrichtung erfasste Schiene-zu-Erde-Spannung vom zulässigen Bereich abweicht und die Differenz zwischen dem Maximalwert und Minimalwert der durch die Vielzahl von Schiene-zu-Erde-Spannungserfassungsvorrichtungen (201, 601, 1101, 1501) erfassten Schiene-zu-Erde-Spannungen ein vorbestimmter Wert oder mehr ist, die Spannungssteuerungsvorrichtung der Schiene-zu-Erde-Spannungen mit Absolutwerten sowohl in die positive als auch in die negative Richtung, die jeweils ein vorbestimmter Wert oder mehr sind, die Schiene-zu-Erde-Spannung an der Installationsposition der Spannungssteuerungsvorrichtung steuert, um den Maximalwert und den Minimalwert im zulässigen Bereich zu halten.

**Revendications**

1. Système de suppression de tension rail-sol pour une chemin de fer électrique, comprenant :

un ou plusieurs dispositifs d'acquisition de tension rail-sol (202) qui acquièrent chacun une tension rail-sol (211) ; et
un dispositif de commande de tension (201, 601, 1101, 1501) qui relie un rail (104) et une électrode de masse (106),
**caractérisé en ce que** :

le dispositif de commande de tension (201, 601, 1101, 1501) comprend une unité de détermination de tension (301, 701, 1201, 1601) qui reçoit la tension rail-sol (211) et délivre en sortie une valeur d'instruction de commande de tension (311), et comprend en outre un circuit de commande de tension (302, 702) qui reçoit la valeur d'instruction de commande de tension, et commande la tension entre le rail et l'électrode de masse, le circuit de commande de tension comprenant un dispositif de résistance variable configuré pour renvoyer la tension entre le rail et l'électrode de masse, et commande une valeur de résistance réelle ou apparente du dispositif de résistance variable de telle sorte que la tension entre le rail et l'électrode de masse présente la valeur d'instruction de commande de tension,
lorsque la tension rail-sol (211) acquise par l'un quelconque des dispositifs d'acquisition de tension rail-sol (202) au niveau d'une position d'installation du dispositif d'acquisition de tension rail-sol s'écarte d'une plage admissible, le dispositif de commande de tension (201, 601, 1101, 1501) commande la tension rail-sol au niveau de la position d'installation du dispositif de commande de tension en connectant le rail (104) et l'électrode de masse (106) correspondant à la tension rail-sol acquise par le dispositif d'acquisition de tension rail-sol pour maintenir la tension rail-sol dans la plage admissible.

2. Système de suppression de tension rail-sol selon la revendication 1, comprenant en outre

une unité de définition de zone cible de protection (1503) qui définit une zone cible de protection sur le rail, la zone cible de protection étant une section cible dans laquelle la tension rail-sol est supprimée, dans lequel
lorsque la tension rail-sol acquise par l'un quelconque des dispositifs d'acquisition de tension rail-sol (202) au niveau de la position d'installation du dispositif d'acquisition de tension rail-sol s'écarte de la plage admissible, le dispositif de commande de tension (1501) commande la tension rail-sol au niveau de la position d'installation du dispositif de commande de tension pour supprimer davantage la tension rail-sol de la zone cible de protection à une valeur prédéterminée.

3. Système de suppression de tension rail-sol selon la revendication 2, dans lequel

l'unité de définition de zone cible de protection (1503) définit une pluralité de zones cibles de protection tout en ajoutant un ordre de priorité, et
lorsque la tension rail-sol acquise par l'un quelconque des dispositifs d'acquisition de tension rail-sol (202) au niveau de la position d'installation du dispositif d'acquisition de tension rail-sol s'écarte de la plage admissible, le dispositif de commande de tension (1501) commande la tension rail-sol au niveau de la position d'installation du dispositif de commande de tension pour supprimer les tensions rail-sol des zones cibles de protection correspondant à l'ordre de priorité.

**4.** Système de suppression de tension rail-sol selon la revendication 2, dans lequel

l'unité de définition de zone cible de protection (1503) définit une pluralité de zones cibles de protection, et lorsque la tension rail-sol acquise par l'un quelconque des dispositifs d'acquisition de tension rail-sol (202) au niveau de la position d'installation du dispositif d'acquisition de tension rail-sol s'écarte de la plage admissible, le dispositif de commande de tension (1501) commande la tension rail-sol au niveau de la position d'installation du dispositif de commande de tension pour supprimer les tensions rail-sol de la pluralité de zones cibles de protection.

**5.** Système de suppression de tension rail-sol selon l'une quelconque des revendications 1 à 4, comprenant

une pluralité des dispositifs de commande de tension (201, 601, 1101, 1501), dans lequel lorsque la tension rail-sol acquise par l'un quelconque des dispositifs d'acquisition de tension rail-sol (202) au niveau de la position d'installation du dispositif d'acquisition de tension rail-sol s'écarte d'une plage admissible, le dispositif de commande de tension (201, 601, 1101, 1501) au niveau de la position d'installation la plus proche du dispositif d'acquisition de tension rail-sol commande la tension rail-sol au niveau de la position d'installation du dispositif de commande de tension.

**6.** Système de suppression de tension rail-sol selon l'une quelconque des revendications 1 à 4, comprenant

une pluralité de dispositifs de commande de tension (201, 601, 1101, 1501), dans lequel lorsque la tension rail-sol acquise par l'un quelconque des dispositifs d'acquisition de tension rail-sol (202) au niveau de la position d'installation du dispositif d'acquisition de tension rail-sol s'écarte d'une plage admissible, le dispositif de commande de tension (201, 601, 1101, 1501) au niveau de la position d'installation la plus proche du dispositif d'acquisition de tension rail-sol commande la tension rail-sol au niveau de la position d'installation du dispositif de commande de tension.

**7.** Système de suppression de tension rail-sol selon l'une quelconque des revendications 1 à 4, comprenant

une pluralité de dispositifs de commande de tension (201, 601, 1101, 1501), dans lequel lorsque la tension rail-sol acquise par l'un quelconque des dispositifs d'acquisition de tension rail-sol (202) au niveau de la position d'installation du dispositif d'acquisition de tension rail-sol s'écarte de la plage admissible, et qu'une différence entre une valeur maximale et une valeur minimale des tensions rail-sol acquises par la pluralité de dispositifs d'acquisition de tension rail-sol (201, 601, 1101, 1501) est une valeur prédéterminée ou plus, le dispositif de commande de tension des tensions rail-sol ayant des valeurs absolues dans les directions positive et négative qui sont chacune une valeur prédéterminée ou plus commande la tension rail-sol au niveau de la position d'installation du dispositif de commande de tension pour maintenir la valeur maximale et la valeur minimale dans la plage admissible.

# FIG. 1

# FIG. 2

# FIG. 3

# FIG. 4

```
        ┌──────────┐
        │  Start   │
        └────┬─────┘
             │         ⌐S401
             ▼
   ╱─────────────────────╲
  ╱  IS RAIL-TO-GROUND    ╲  No
 ⟨   VOLTAGE POSITIVE?     ⟩──────────┐
  ╲                       ╱           │
   ╲─────────────────────╱            │
             │ Yes    ⌐S402           │      ⌐S403
             ▼                        ▼
  ┌────────────────────┐   ┌────────────────────┐
  │ SET VOLTAGE CONTROL│   │ SET VOLTAGE CONTROL│
  │ COMMAND VALUE TO   │   │ COMMAND VALUE TO   │
  │ ALLOWABLE MAXIMUM  │   │ ALLOWABLE MINIMUM  │
  │ VALUE AND OUTPUT   │   │ VALUE AND OUTPUT   │
  └─────────┬──────────┘   └─────────┬──────────┘
            │                        │
            │◄───────────────────────┘
            ▼
        ┌──────────┐
        │   End    │
        └──────────┘
```

# FIG. 5

# FIG. 6

# FIG. 7

# FIG. 8

Start

S801

HAS ANY OF
RAIL-TO-GROUND
VOLTAGES EXCEEDED
ALLOWABLE
MAXIMUM VALUE?

No

S802

Yes

HAS ANY OF
RAIL-TO-GROUND
VOLTAGES FALLEN
BELOW ALLOWABLE
MINIMUM VALUE?

No

Yes

S803

CALCULATE VOLTAGE CONTROL COMMAND
VALUE BASED ON FORMULA (1) AND OUTPUT

S804

CALCULATE VOLTAGE CONTROL COMMAND
VALUE BASED ON FORMULA (2) AND OUTPUT

End

# FIG. 9

ALLOWABLE
MAXIMUM VALUE

ALLOWABLE
RANGE

ALLOWABLE
MINIMUM VALUE

STEP DOWN IN POSITIVE DIRECTION

# FIG. 10

FIG. 11

# FIG. 12

211a
211b
211c
211d

1201

VOLTAGE
DETERMINATION
UNIT

311

702

VOLTAGE
CONTROL
CIRCUIT

104

1101

106

# FIG. 13

Start

S1301

HAS ANY OF
RAIL-TO-GROUND
VOLTAGES EXCEEDED
ALLOWABLE MAXIMUM
VALUE?

No

Yes

S1302

HAS ANY OF
RAIL-TO-GROUND
VOLTAGE FALLEN BELOW
ALLOWABLE MINIMUM
VALUE?

No

Yes

S1303

CALCULATE VOLTAGE CONTROL COMMAND
VALUE BASED ON FORMULA (3) AND OUTPUT

S1304

CALCULATE VOLTAGE CONTROL COMMAND
VALUE BASED ON FORMULA (4) AND OUTPUT

End

# FIG. 14

CONTROL VOLTAGE OF VOLTAGE CONTROL DEVICE
SUCH THAT DIFFERENCE d1 BETWEEN MAXIMUM VALUE
AND ALLOWABLE MAXIMUM VALUE OF RAIL-TO-GROUND
VOLTAGE BECOMES SAME AS DIFFERENCE d2 BETWEEN
MINIMUM VALUE AND ALLOWABLE MINIMUM VALUE OF
RAIL-TO-GROUND VOLTAGE

# FIG. 15

FIG. 16

# FIG. 17

```
                    ┌──────────┐
                    │  Start   │
                    └────┬─────┘
                         │                    S1701
                         ▼
        ╱────────────────────────────╲
       ╱      HAS ANY OF              ╲      No
      ╱    RAIL-TO-GROUND              ╲──────────────────────────┐
      ╲   VOLTAGE EXCEEDED            ╱                           │
       ╲     ALLOWABLE               ╱                            │
        ╲  MAXIMUM VALUE?          ╱                              ▼
         ╲──────────────────────╱                  S1702   ╱──────────────────────╲
                │                                          ╱      HAS ANY OF        ╲   No
               Yes                                        ╱    RAIL-TO-GROUND        ╲──────────┐
                │                                         ╲   VOLTAGE EXCEEDED       ╱          │
                │                         S1703            ╲     ALLOWABLE          ╱           │
                ▼                                           ╲  MINIMUM VALUE?      ╱            │
        ╱────────────────────╲       No                      ╲──────────────────╱              │
       ╱   IS FORMULA (5)     ╲──────────────┐                      │                          │
       ╲    SATISFIED?        ╱              │                     Yes              S1706       │
        ╲──────────────────╱                │                      │                           │
                │                            │                      ▼                           │
               Yes          S1704            │           S1705  ╱──────────────────╲   No       │
                │                            │                 ╱  IS FORMULA (8)     ╲──────┐    │
                ▼                            ▼                 ╲   SATISFIED?        ╱      │    │
        ┌──────────────┐          ┌──────────────┐             ╲──────────────────╱       │    │
        │CALCULATE VOLT│          │CALCULATE VOLT│                    │                    │    │
        │AGE CONTROL   │          │AGE CONTROL   │                   Yes        S1707      │    │
        │COMMAND VALUE │          │COMMAND VALUE │                    │                    │    │
        │BASED ON      │          │BASED ON      │                    ▼          S1708     ▼    │
        │FORMULA (6)   │          │FORMULA (7)   │          ┌──────────────┐    ┌──────────────┐│
        │AND OUTPUT    │          │AND OUTPUT    │          │CALCULATE VOLT│    │CALCULATE VOLT││
        └──────┬───────┘          └──────┬───────┘          │AGE CONTROL   │    │AGE CONTROL   ││
               │                         │                  │COMMAND VALUE │    │COMMAND VALUE ││
               │                         │                  │BASED ON      │    │BASED ON      ││
               │                         │                  │FORMULA (9)   │    │FORMULA (10)  ││
               │                         │                  │AND OUTPUT    │    │AND OUTPUT    ││
               │                         │                  └──────┬───────┘    └──────┬───────┘│
               │                         │                         │                   │        │
               │◄────────────────────────┴─────────────────────────┴───────────────────┴────────┘
               ▼
        ┌──────────┐
        │   End    │
        └──────────┘
```

# FIG. 18

CONTROL VOLTAGE OF VOLTAGE CONTROL DEVICE
SUCH THAT RAIL-TO-GROUND VOLTAGE IS KEPT IN
ALLOWABLE RANGE AND AVERAGE VALUE OF
RAIL-TO-GROUND VOLTAGE ABSOLUTE VALUES IN
PROTECTION TARGET AREA IS DECREASED

PROTECTION TARGET AREA

**EP 3 885 183 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018185284 A